# EUROPÄISCHE PATENTSCHRIFT

(11) **EP 0 675 627 B1**
(45) Veröffentlichungstag und Bekanntmachung des Hinweises auf die Patenterteilung: **25.07.2001**
(21) Anmeldenummer: 95103598.9
(22) Anmeldetag: 13.03.1995
(51) Int. Cl.: H04M 11/00

(54) **Multimediale Kommunikationseinrichtung**
Multimedia communication arrangement
Arrangement de communication multi-médial

(30) Priorität: 31.03.1994 DE 9405518 U
(43) Veröffentlichungstag der Anmeldung: 04.10.1995
(73) Patentinhaber: SIEMENS AKTIENGESELLSCHAFT, 80333 München (DE)
(72) Erfinder: Conrad, Guido, Dipl.-Ing. (FH), D-97230 Estenfeld (DE); Vieweg, Uwe, Dipl.-Inf., D-97218 Gerbrunn (DE)

(56) Entgegenhaltungen:
- EP-A- 0 264 553
- EP-A- 0 540 411
- DE-A- 4 218 125

## Beschreibung

Die Erfindung betrifft eine multimediale Kommunikationseinrichtung, welche ein zentrales Kommunikationsverteilungsnetz aufweist.

Zur Abrundung und Erweiterung des Leistungsspektrums wird es zunehmend üblich, in einzelne Gerätetypen bislang getrennt vorgesehene Komponenten im Sinne einer multimedialen Funktionserweiterung zu integrieren. So werden z.B. Personalcomputer zunehmend mit Komponenten bestückt, die im Sinne einer multimedialen Datenverarbeitungsvorrichtung eine kombinierte Verarbeitung von konventionellen Programmsequenzen mit Audio- und Videosignalen ermöglichen.

Aus der DE 42 18 125 A1 ist eine Fernsteuereinrichtung für ein Fernsehgerät insbesondere zum Einsatz in einem Krankenhaus bekannt. Dabei ist eine Bedienungseinrichtung, z.B. ein Telefon, über eine erste Leitung an das Steuergerät des Fernsehgeräts und über eine zweite Leitung zusätzlich an ein Telefonnetz angeschlossen.

Aus der EP 0 264 553 A2 ist eine weitere Fernsteuereinrichtung beispielsweise für ein Fernsehgerät in einem Patientenzimmer bekannt. Dabei kann eine Vielzahl von Fernsteuereinrichtungen über eine gemeinsame Datenleitung oder über einen anschlussindividuellen Datenkanal einer digitalen Fernsprechanlage angeschlossen sein.

Demgegenüber liegt der Erfindung die Aufgabe zugrunde, eine multimediale Kommunikationseinrichtung zu schaffen, welche es unter Einsatz von möglichst herkömmlichen bzw. handelüblichen Kommunikationsendgeräten, die in größeren Stückzahlen im Gesamtbereich einer Kommunikationseinrichtung verteilt angeordnet sein können, ermöglicht, weitere ausgewählte Betriebsmittel der multimedialen Kommunikationseinrichtung im Sinne einer Fernsteuerung zentral zu bedienen.

Die Aufgabe wird gelöst mit der im Anspruch 1 angegebenen Kommunikationseinrichtung. Vorteilhafte Ausführungsformen derselben sind in den Unteransprüchen angegeben.

Die erfindungsgemäße, multimediale Kommunikationseinrichtung weist als Kernstück ein zentrales Kommunikationsverteilungsnetz auf, an das mindestens ein Kommunikationsendgerät angeschlossen ist. Hierüber wird Teilnehmern zumindest die Einspeisung von Daten in das Kommunikationsverteilungsnetz insbesondere in Form von akkustischen Signalen ermöglicht. Gegebenenfalls ist darüberhinaus auch das Eingeben und Abrufen von Daten z.B. in Textform möglich. Als ein Beispiel für derartige Kommunikationsendgeräte können konventionelle Telefone bzw. kombinierte Telefon-Telefax-Geräte genannt werden. Darüberhinaus sind eine Vielzahl von weiteren Kommunikationsendgeräten möglich. So ist es z.B. auch über einen mittels einer Modemschnittstelle an das Kommunikationsverteilungsnetz angeschlossenen Computer bzw. einer computerähnlichen Kommunikationseinrichtung für Endbenutzer möglich, Daten unterschiedlichsten Inhalts in das zentrale Kommunikationsverteilungsnetz einzuspeisen und zu empfangen.

Die erfindungsgemäße, multimediale Kommunikationseinrichtung weist ferner eine an das zentrale Kommunikationsverteilungsnetz angeschlossene Steuereinheit auf. Über diese sind als weitere Betriebsmittel der multimedialen Kommunikationseinrichtung mindestens ein Rundfunkempfangsgerät und jeweis mindestens ein Fernsehgerät betreibbar. Erfindungsgemäß ist insbesondere das zentrale Kommunikationsverteilungsnetz so ausgelegt, daß über das mindestens eine Kommunikationsendgerät Signale zur Fernsteuerung des jeweils mindestens einen Rundfunkempfangs- und Fernsehgerätes an die Steuereinheit übermittelbar sind.

Die Erfindung weist den Vorteil auf, daß bereits mit Hilfe von herkömmlichen Kommunikationsendgeräten, z.B. Telefonen, eine deren bisherige Funktion erheblich erweiternde Fernsteuerung von akustischen und video-akustischen Betriebsmitteln möglich ist, d.h. insbesondere von Rundfunkempfangs- und Fernsehgeräten. Die üblicherweise für diese Geräte vorhandenen und auf der Basis z.B. einer Infrarot-Datenübertragungsstrecke basierenden separaten "Fernbedienungen" können somit für diese Geräte entfallen. Die Fernsteuerfunktion wird somit erfindungsgemäß über das in der Regel ohnehin vorhandene Kommunikationsendgerät, insbesondere ein Telefon, ermöglicht. Für den Nutzer ist es somit vorteilhaft möglich, an mindestens ein Rundfunkempfangs- und Fernsehgerät gerichtete Fernsteuerbefehle über ein einziges, bevorzugt zentral und ergonomisch günstigt angeordnetes Kommunikationsendgerät über das zentrale Kommunikationsverteilungsnetz der multimedialen Kommunikationseinrichtung weiterzugeben.

Eine derartige Einrichtung ist bevorzugt geeignet z.B. für Krankenhäuser, Hotels und dergleichen. Die erfindungsgemäße multimediale Kommunikationseinrichtung ermöglicht dabei z.B. in einem Patienten- bzw. Hotelzimmer eine Steuerung von dort befindlichen Rundfunk- und Fernsehgeräten mit Hilfe des in der Regel ebenfalls dort befindlichen Kommunikationsendgerätes, z.B. eines Telefons, über ein alle diese Betriebsmittel miteinander verbindendes zentrales Kommunikationsverteilungsnetz.

Der Vorteil dieser Anordnung liegt insbesondere darin, daß über ein einziges, insbesondere in einem abgeschlossenen Zimmer z.B. eines Hotels bzw. Krankenhauses angeordnetes Kommunikationsendgerät zusätzlich Fernsteuersignale für die gegebenenfalls im Raum verteilt angeordneten Rundfunkempfangs- und Fernsehgeräte abgegeben werden können. Ist z.B. ein solches Kommunikationsendgerät an einem Bett platziert, so kann eine darin befindliche Person neben der Benutzung des durch das jeweilige Kommunikationsendgerät bereitgestellten Kommunikationsdienstes gleichzeitig eine Fernsteuerung von mindestens einem Rundfunkempfangs- und Fernsehgerät vornehmen, ohne das Bett verlassen zu müssen. Dies ist insbesondere in Krankenhäusern und Hotels von Bedeutung.

Gemäß einer weiteren Ausführung der erfindungsgemäßen Vorrichtung sind in die Steuereinheit mindestens ein Steuermodul für ein externes Fernsehgerät und mindestens ein steuerbares Rundfunkempfangsmodul integriert. Diese Ausführung hat den Vorteil, daß das steuerbare Rundfunkempfangsmodul nicht mehr extern vorhanden zu sein braucht, sondern als Baustein neben dem Steuermodul für das externe Fernsehgerät direkt in der Steuereinheit integriert ist. Gegebenenfalls kann auch die Videoepfangseinheit für das Fernsehbild in der Steuereinheit integriert sein, so daß zu dessen Anzeige lediglich ein Monitor benötigt wird.

Bei dieser Ausführung ist pro Rundfunkempfangsmodul vorteilhaft mindestens eine, von den in der Steuereinheit integrierten Rundfunkempfangsmodulen räumlich getrennte, separate Anschlußeinheit für zumindest eine Wiedergabevorrichtung vorhanden, insbesondere für einen Lautsprecher bzw. Kopfhörer. Diese weist mindestens eine Anschlußkupplung für die Wiedergabevorrichtung auf und zusätzlich eine Regeleinrichtung zur Einstellung der Lautstärke der Wiedergabevorrichtung. Bei einer weiteren, vorteilhaften Ausführungsform der Erfindung ist die Anschlußeinheit, welche die Anschlußkupplung für eine Wiedergabevorrichtung und die Regeleinrichtung für deren Lautstärke aufweist, in das Kommunikationsendgerät integriert. Handelt es sich dabei z.B. um ein Telefon, so sind diese Elemente vorteilhaft neben dem Tastenfeld auf der Oberfläche des Telefones angeordnet.

Bei einer weiteren Ausführung der Erfindung kann das zentrale Kommunikationsverteilungsnetz ein Teilnetz für Telekommunikationssignale aufweisen, an welches die Kommunikationsendgeräte angeschlossen sind, und ein zusätzliches, paralleles Teilnetz für sogenannte Antennensignale aufweisen, an welches die Steuereinheit für das mindestens eine Rundfunkempfangsgerät und das Fernsehgerät angeschlossen ist. Bei dieser Ausführung ist im zentralen Kommunikationsverteilungsnetz bevorzugt ein Einspeiseadapter vorhanden, womit die über das mindestens eine Kommunikationsendgerät zur Fernsteuerung des jeweils mindestens einen Rundfunkempfangs- und Fernsehgerätes in das Teilnetz für die Telekommunikationssignale eingespeisten Fernsteuersignale zur Weitergabe an die Steuereinheit in das Parallelnetz für die Antennensignale übermittelt werden.

Die Erfindung wird des weiteren anhand von zwei Ausführungsbeispielen näher beschrieben, die in den nachfolgend kurz angeführten Figuren dargestellt sind. Dabei zeigen
- FIG 1: eine multimediale Kommunikationseinrichtung gemäß der Erfindung mit einem zentralen Kommunikationsverteilungsnetz und beispielhaft drei Telefonen pro Raumeinheit als Kommunikationsendgeräte, und
- FIG 2: eine dem in FIG 1 dargestellten Beispiel im wesentlichen entsprechende Ausführung, bei der das zentrale Kommunikatonsverteilungsnetz ein Teilnetz für Kommunikationssignale und ein paralleles Teilnetz für Antennensignale aufweist.

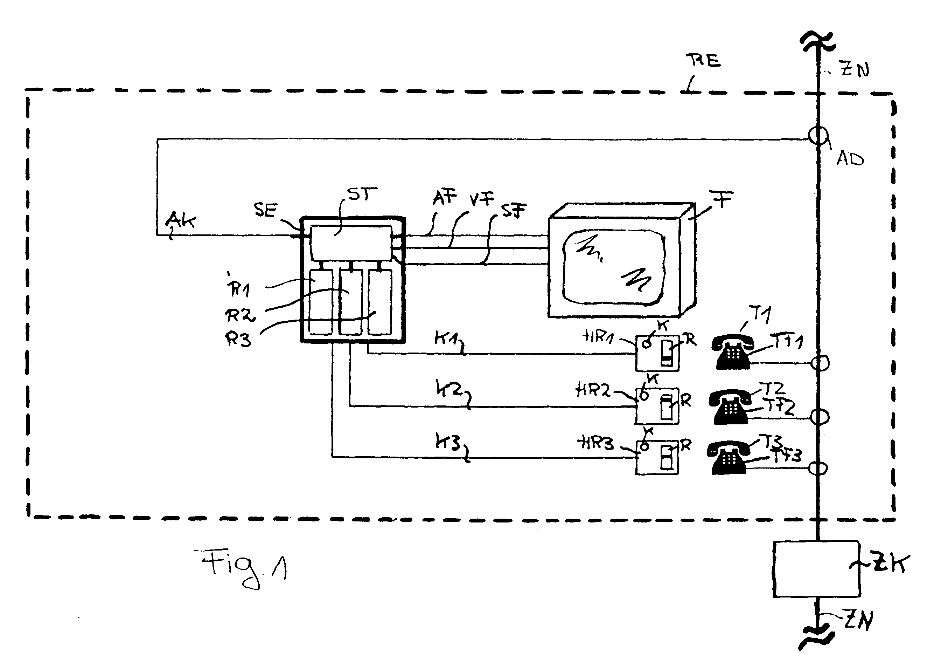

Die multimediale Kommunikationseinrichtung gemäß dem Beispiel von FIG 1 weist ein zentrales Kommunikationsverteilungsnetz ZN auf, welches von einer zentralen Kommunikationsanlage ZK betrieben wird. Diese koordiniert die Übermittlung von Telekommunikations-, Audio- und Videosignalen über das Kommunikationsverteilungsnetz ZN. Bei den Telekommunikationssignalen handelt es sich um Signale, welche von den Kommunikationsendgeräten in das Kommunikationsverteilungssnetz eingespeist bzw. daraus empfangen werden. Demgegenüber sind die Audio- und Videosignale für den Emfpang durch die angeschlossenen und Rundfunkempfangs- und Fernsehgeräte bestimmt.

Bei dem in FIG 1 dargestellten Beispiel durchquert das zentrale Kommunikationsverteilungsnetz ZN eine strichpunktiert dargestellte und mit RE bezeichnete sogenannte Raumeinheit, bei der es sich z.B. um ein Zimmer in einem Hotel bzw. einem Krankenhaus handeln kann. In diesem Zimmer sind beispielsweise drei Kommunikationsendgeräte in Form der Telefone T1,T2,T3 aufgestellt und am zentralen Kommunikationsverteilungsnetz ZN angeschlossen. Ferner befindet sich in der Raumeinheit RE ein Fernsehgerät F und eine der Anzahl der Kommunikationsendgeräte T1,T2,T3 entsprechende Anzahl von Rundfunkempfangsgeräten R1,R2,R3. Diese sind bevorzugt in Form von steuerbaren Rundfunkempfangsmodulen in das Innere einer Steuereinheit SE integriert.

Erfindungsgemäß sind insbesondere das Kommunikationsverteilungsnetz ZN und die zentrale Kommunikationseinheit ZK so ausgelegt, daß an das Fernsehgerät F und die Rundfunkempfangsmodule R1,R2,R3 gerichtete Fernsteuersignale über die Tastenfelder TF1,TF2,TF3 der als Kommunikationsendgeräte dienende Telefone T1,T2,T3 eingegeben und verteilt werden können. Diese Steuersignale können pro Raumeinheit RE über eine Anschlußdose AD und einem daran befindlichen Anschlußkabel AK einer der Raumeinheit RE zugeordneten Steuereinheit SE zugeführt werden. Diese verfügt bei dem in FIG 1 dargestellten Ausführungsbeispiel über ein Steuermodul ST, welches das Fernsehgerät F betreibt. Bei den in FIG 1 dargestellten Beispiel wird die Verbindung zwischen Steuermodul ST und Fernsehgerät F beispielhaft über ein Antennenkabel AF, ein zusätzliches Videosignalkabel VF und ein Steuersignalkabel SF hergestellt.

In der Steuereinheit SE sind bei dem in FIG 1 dargestellten Beispiel zusätzlich drei steuerbare Rundfunkempfangsmodule R1,R2,R3 integriert. An diesen ist über je ein Übertragungskabel K1,K2,K3 eine bevorzugt separate Anschlußeinheit HR1,HR2,HR3 angeschlossen. Jede der Anschlußeinheiten weist bevorzugt eine Anschlußkupplung K für eine Wiedergabevorrichtung auf, insbesondere einen Kopfhörer, und eine Regeleinrichtung R für deren Lautstärke auf. Jedem der Kommunikationsendgeräte T1,T2,T3 ist somit eine bevorzugt in unmittelbarer Nähe angeordnete bzw. in diese integrierte Anschlußeinheit HR1,HR2,HR3 zugeordnet.

Das in FIG 1 dargestellte Ausführungsbeispiel ist besonders geeignet zur Ausrüstung von einer als ein Patientenzimmer in einem Krankenhaus dienenden Raumeinheit RE. In diesem Fall ist das Zimmer zur Aufnahme von drei Patientenbetten ausgelegt. Einem jeden ist eines der als Kommunikationsendgeräte dienenden Telefone T1,T2,T3, eine jeweils bevorzugt darin integrierte Anschlußeinheit HR1,HR2,HR3 und je ein steuerbares Rundfunkempfangsmodul R1,R2,R3 in der Steuereinheit SE zugeordnet. Für die Patienten besteht in diesem Beispiel somit die Möglichkeit, neben der Führung und der Entgegennahme von Telefongesprächen über das Kommunikationsendgerät auch eine Fernsteuerung des Fernsehgerätes F und des jeweils zugeordneten Rundfunkempfangsmodules vorzunehmen, ohne die räumliche Nähe zum Kommunikationsendgerät, d.h. insbesondere ein Patientenbett, verlassen zu müssen. Bei dem in FIG 1 dargestellten Beispiel kann somit über ein jedes Telefon T1,T2, T3 ein gemeinsames Fernsehprogramm auf dem Fernsehgerät F bzw. ein patientenspezifisches Rundfunkprogramm über das jeweils zugeordnete steuerbare Rundfunkempfangsmodul R1,R2,R3 ausgewählt werden.

Bei einem anderen, nicht dargestellten Beispiel ist es auch möglich, daß eine der Anzahl der Kommunikationsendgeräten und der steuerbaren Radiomodule entsprechende Anzahl von Fernsehgeräten über die gemeinsame Steuereinheit SE betrieben wird. In einem solchen Fall ist es dann z.B. in einem Patientenzimmer in einem Krankenhaus möglich, das jeder Patient über das zentrale Kommunikationsverteilungsnetz und das jeweilige Kommunikationsendgerät ein gewünschtes Programm an dem jeweils zugeordneten Fernsehgerät und dem Rundfunkempfangsgerät individuell auswählt.

Die erfindungsgemäße Kommuniktionseinrichtung ermöglicht darüber hinaus besonders vorteilhaft den Aufbau und die Ausnutzung von funktionellen Wechselwirkungen zwischen den einzelnen Betriebsmitteln. So kann die Steuereinheit SE bevorzugt so ausgelegt werden, daß durch Fernsteuerung über das jeweils zugeordnete Kommunikationsendgerät T1,T2,T3 die aktuell an dem externen Fernsehgerät F und an den Rundfunkempfangsgeräten R1,R2,R3 angewählten Programme auf dem Bildschirm des Fernsehgerätes F eingeblendet werden können. Ferner kann die Steuereinheit SE so ausgelegt werden, daß durch Fernsteuerung über das jeweils zugeordnete Kommunikationsendgerät T1, T2,T3 der Ton von einem der Rundfunkempfangsgeräte R1,R2,R3 über einen Lautsprecher des externen Fernsehgerätes F wiedergegeben werden kann.

Ferner ist es insbesondere für Patienten vorteilhaft, wenn die Steuereinheit SE so ausgelegt ist, daß durch Fernsteuerung über eines der Kommunikationsendgeräte T1,T2,T3 der Ton des externen Fernsehgerätes F über eine an einem Rundfunkempfangsgerät R1,R2,R3 angeschlossene Wiedergabevorrichtung, insbesondere einen Kopfhörer, wiedergegeben werden kann. Ferner ist es möglich, die Steuereinheit SE so auszulegen, daß durch Fernsteuerung über eines der Kommunikationsendgeräte T1,T2,T3 weitere Dienste über das Fernsehgerät und die zugeordnten Rundfunkempfangsgeräte nutzbar werden. So kann z.B. die Auswahl von inviduell gewünschten Videotext- bzw. Bildschirmtextseiten (BTX) und deren Anzeige auf dem Fernsehgerät durch Fernsteuerung über das zugeordnete Kommunikationsendgerät T1,T2,T3 veranlaßt werden.

Die erfindungsgemäße, multimediale Kommunikationseinrichtung hat neben der zentralen Steuerung aller am Kommunikationsverteilungsnetz angeschlossenen Betriebsmittel und der Eröffnung von funktionellen Wechselwirkungen zwischen denselben mittels eines einzigen Kommunikationsgerätes den Vorteil, daß auch eine zentrale Überwachungs- und Verwaltungsdienste realisiert werden können. So ist es z.B. möglich, in die zentrale Kommunikationsanlage ZK eine zentrale Gebührenerfassung für die über das jeweilige Kommunikationsendgerät T1,T2,T3 in Anspruch genommenen Benutzungszeiten der jeweiligen Betriebsmittel zu integrieren.

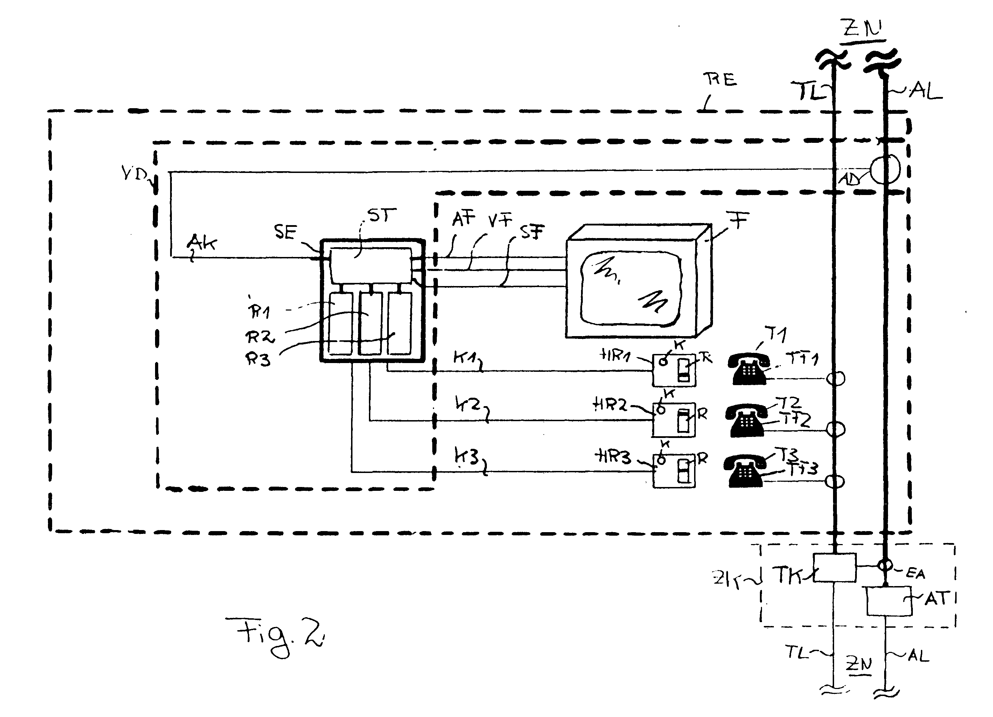

Gemäß dem in FIG 2 dargestellten weiteren Ausführungsbeispiel der erfindungsgemäßen multimedialen Kommunikationseinrichtung kann die Steuereinheit SE, komplett mit Kabelverbindung AK und Anschuß AE an das zentrale Kommunikationsverteilungsnetz ZN in einer Verteilerdose VD integriert sein, welche bevorzugt zur Wandmontage geeignet ist.

Über die in FIG 1 dargestellte Ausführungen hinausgehend weist das im Beispiel der FIG 2 dargestellte zentrale Kommunikationsverteilungsnetz ZN ein ersten Teilnetz TK für Telekommunikationssignale, und ein paralleles zweites Teilnetz AL für sogenannte Antennensignale auf. Dementsprechend weist die zentrale Kommunikationsanlage ZK eine Teilanlage TK für die Organisation von Telekommunikation und eine Teilanlage AT für die Einspeisung von sogenannten Antennensignalen auf. Die beispielsweise drei telefonartigen Kommunikationsendgeräte T1,T2,T3 sind im Beispiel der Fig 2 an dem zur Übertragung von Telekommunikationssignalen dienenden Teilnetz TL des Kommunikationsverteilungsnetzes ZK angeschlossen. Ferner ist bevorzugt pro Raumeinheit RE die zum Betrieb der darin befindlichen Rundfunkempfangsgeräte R1,R2,R3 und dem Fernsehgerät F dienende Steuereinheit SE bevorzugt über ein Anschlußkabel AK und eine Anschlußdose AD an dem Teilnetz AL für Antennensignale angeschlossen.

Sind gemäß den in FIG 2 dargestellten Beispiel eine Teilanlage TK für Telekommunikation und eine Teilanlage AT für Antennensignale in der zentralen Kommunikationsanlage ZK vorgesehen, so ist eine Schnittstelle zwischen dem Teilnetzen TL,AL und den dazu gehörigen Teilanlagen TK,AT vorhanden. Über diese Schnittstelle werden die mittels der Kommunikationsendgeräte T1... in das Teilnetz TL für Telekommunikationssignale eingespeisten und zur Fernsteuerung der Rundfunkempfangs- und Fernsehgeräte dienen Fernsteuersignale in das parallele Teilnetz AT für Antennensignale übermittelt, damit diese dann gemeinsam mit en dort übertragenen Audio- und Videosignalen über die Anschlußdose AD von der Steuereinheit SE empfangen und ausgewertet werden können.

Hierzu kann die Teilanlage TK für Telekommunikation unmittelbar mit der Teilanlage AT für die Antennensignale gekoppelt sein. Bei dem in FIG 2 dargestellten Beispiel werden die von den Kommunikationsendgeräten T1,... eingespeisten Steuersignale von der dazugehörigen Teilanlage TK für Telekommunikationssignale umgesetzt und über einen getrennten Einspeiseadapter EA unmittelbar in das Teilnetz AL für Antennensignale eingespeist. An der Anschlußdose AD werden von der Steuereinheit SE in diesem Fall somit Audio- und Videosignale entnommen, welche die jeweiligen Bild- und Toninformationen für das jeweils mindestens eine Rundfunkempfangsgerät R1, ... und das mindestens einem Fernsehgerät F enthalten. Diesen Signalen sind erfindungsgemäß Fernsteuersignale überlagert, die über das jeweilige Kommunikationsendgerät T1,... vorgegeben werden und eine benutzungsspezifische Kanalumschaltung bzw. Programmauswahl beim Fernsehgerät F und dem bevorzugt in der Steuereinheit integrierten steuerbaren Rundfunkempfangsmodulen R1,... bewirken.

## Patentansprüche

1. Multimediale Kommunikationseinrichtung mit zumindest jeweils einem Rundfunkempfangs- (R1,R2,R3) und Fernsehgerät (F), welche aufweist
a) ein zentrales Kommunikationsverteilungsnetz (ZN), das ein Teilnetz (TL) für Telekommunikationssignale und ein Teilnetz (AL) für Antennensignale enthält,
b) mindestens ein Kommunikationsendgerät (T1,T2,T3), insbesondere ein Telefon, welches an das Teilnetz (TL) für Telekommunikationssignale angeschlossen ist und womit Fernsteuersignale zur Fernsteuerung des jeweils mindestens einen Rundfunkempfangs- (R1,R2,R3) und Fernsehgerätes (F) in das Teilnetz (TL) für Telekommunikationssignale eingespeist werden können,
c) einen Einspeiseadapter (EA), womit Fernsteuersignale vom Teilnetz (TK) für Telekommunikationssignale in das Teilnetz (AL) für Antennensignale (AL) übermittelt werden, und
d) eine Steuereinheit (SE), welche an das Teilnetz (AL) für Antennensignale angeschlossen ist und die Fernsteuersignale zum Betrieb des jeweils mindestens einen Rundfunkempfangs- (R1,R2,R3) und Fernsehgerätes (F) auswertet.

2. Vorrichtung nach Anspruch 1, wobei die Steuereinheit (SE) so ausgelegt ist, dass durch Fernsteuerung über das mindestens eine Kommunikationsendgerät (T1, T2,T3) die aktuell an dem externen Fernsehgerät (F) und dem mindestens einen Rundfunkempfangsgerät (R1,R2,R3) angewählten Programme auf dem Bildschirm des Fernsehgerätes (F) eingeblendet werden können.

3. Vorrichtung nach Anspruch 1 oder 2, wobei die Steuereinheit (SE) so ausgelegt ist, daß durch Fernsteuerung über das mindestens eine Kommunikationsendgerät (T1,T2,T3) der Ton von einem Rundfunkempfangsgerät (R1,R2,R3) über einen Lautsprecher des externen Fernsehgerätes (F) wiedergegeben werden kann.

4. Vorrichtung nach einem der vorangegangenen Ansprüche, wobei die Steuereinheit (SE) so ausgelegt ist, dass durch Fernsteuerung über das mindestens eine Kommunikationsendgerät (T1, T2,T3) der Ton des externen Fernsehgerätes (F) über eine an einem Rundfunkempfangsgerät (R1,R2,R3) angeschlossene Wiedergabevorrichtung, insbesondere einen Kopfhörer, wiedergegeben werden kann.

5. Vorrichtung nach einem der vorangegangenen Ansprüche, wobei in die Steuereinheit (SE) mindestens ein Steuermodul (ST) für ein externes Fernsehgerät (F) und mindestens ein steuerbares Rundfunkempfangsmodul (R1,R2,R3) integriert sind.

6. Vorrichtung nach einem der vorangegangenen Ansprüche, wobei pro Rundfunkempfangsgerät (R1,R2,R3) eine separate Anschlusseinheit (HR1,HR2,HR3) für zumindest eine Wiedergabevorrichtung vorhanden ist, insbesondere einen Kopfhörer.

7. Vorrichtung nach Anspruch 6, wobei eine separate Anschlusseinheit (HR1,HR2,HR3) mindestens eine Anschlusskupplung (K) für eine Wiedergabevorrichtung, insbesondere einen Kopfhörer, und eine Regeleinrichtung (R) für die Lautstärke der Wiedergabevorrichtung aufweist.

8. Vorrichtung nach Anspruch 6 oder 7, wobei die einem Rundfunkempfangesgerät (R1,R2,R3) zugeordnete Anschlusseinheit (HR1,HR2,HR3) in ein zugeordnetes Kommunikationsendgerät (T1,T2,T3) integriert ist.

9. Vorrichtung nach einem der vorangegangenen Ansprüche, wobei die Steuereinheit (SE) und deren Anschluss (AD,AK) an das zentrale Kommunikationsverteilungsnetz (ZN) in eine bevorzugt an eine Wand montierbare Verteilerdose (VD) integriert sind.

## Claims

1. Multimedia communications facility with at least one radio receiver device (R1, R2, R3) and at least one television set (F), which has
a) a central communications distribution network (ZN) which contains a subnetwork (TL) for telecommunications signals and a subnetwork (AL) for antenna signals,
b) at least one communications terminal device (T1, T2, T3), in particular a telephone, which is connected to the subnetwork (TL) for telecommunications signals and through which remote control signals for remote control of at least one radio receiver device (R1, R2, R3) and at least one television set (F) can be fed into the subnetwork (TL) for telecommunications signals,
c) a feed adapter (EA) with which remote control signals from the subnetwork (TK) for telecommunications signals are transferred into the subnetwork (AL) for antenna signals (AL), and
d) a control unit (SE) which is connected to the subnetwork (AL) for antenna signals and evaluates the remote control signals for the operation of at least one radio receiver device (R1, R2, R3) and at least one television set (F).

2. Device according to Claim 1, with the control unit (SE) being configured such that through remote control over the at least one communications device (T1, T2, T3) the programs currently selected on the external television set (F) and at least one radio receiver device (R1, R2, R3) can be displayed on the screen of the television set (F).

3. Device according to Claim 1 or 2 with the control unit (SE) being configured such that through remote control over at least one communications terminal device (T1, T2, T3), the sound from a radio receiver device (R1, R2, R3) can be reproduced over a loudspeaker of the external television set (F).

4. Device according to one of the preceding claims with the control unit (SE) being configured such that through remote control over at least one communications terminal device (T1, T2, T3) the sound of the external television set (F) can be reproduced through a reproducing device, in particular a headphone, connected to a radio receiver device (R1, R2, R3).

5. Device according to one of the preceding claims with a control module (ST) for an external television set (F) and at least one controllable radio receiver module (R1, R2, R3) being integrated into the control unit (SE).

6. Device according to one of the preceding claims with a separate connector unit (HR1, HR2, HR3) per radio receiver device (R1, R2, R3) for at least one reproducing device being present, in particular a headphone.

7. Device according to Claim 6 with a separate connector unit (HR1, HR2, HR3) having at least one connector coupling (K) for a reproducing device, in particular a headphone, and a regulating device (R) for the volume of the reproducing device.

8. Device according to Claim 6 or 7 with the connector unit (HR1, HR2, HR3) assigned to a radio receiver device (R1, R2, R3) being integrated into an assigned communications terminal device (T1, T2, T3).

9. Device according to one of the preceding claims with the control unit (SE) and its connection (AD, AK) to the central communications distribution network (ZN) being integrated in a distribution socket (VD) preferably mounted on a wall.

## Revendications

1. Dispositif de communication multimédia ayant au moins respectivement un récepteur de radiodiffusion (R1, R2, R3) et un récepteur de télévision (F), qui comporte
a) un réseau de distribution de communication central (ZN), qui comporte un sous-réseau (TL) pour signaux de télécommunication et un sous-réseau (AL) pour signaux d'antenne,
b) au moins un terminal de communication (T1, T2, T3), notamment un téléphone, qui est raccordé au sous-réseau (TL) pour signaux de télécommunication et avec lequel des signaux de télécommande destinés à télécommander le ou les récepteurs de radiodiffusion (R1, R2, R3) et de télévision (F) peuvent être introduits dans le sous-réseau (TL) pour signaux de télécommunication,
c) un adaptateur d'entrée (EA), par lequel des signaux de télécommande sont transmis par le sous-réseau (TK) pour signaux de télécommunication dans le sous-réseau (AL) pour signaux d'antenne, et
d) une unité de commande (SE) qui est raccordée au sous-réseau (AL) pour signaux d'antenne et qui évalue des signaux de télécommande pour contrôler le ou les récepteurs de radiodiffusion (R1, R2, R3) et de télévision (F).

2. Dispositif selon la revendication 1, dans lequel l'unité de commande (SE) est conçue de telle sorte que, par une télécommande par l'intermédiaire du ou des terminaux de communication (T1, T2, T3), les programmes actuellement sélectionnés sur le téléviseur externe (F) et sur le ou les récepteurs de radio (R1, R2, R3), peuvent être insérés sur l'écran du téléviseur (F).

3. Dispositif selon la revendication 1 ou 2, dans lequel l'unité de commande (SE) est conçue de telle sorte que, par une télécommande par l'intermédiaire du ou des terminaux de communication (T1, T2, T3), le son d'un récepteur de radiodiffusion (R1, R2, R3) peut être reproduit par l'intermédiaire d'un haut-parleur du téléviseur externe (F).

4. Dispositif selon l'une des revendications précédentes, dans lequel l'unité de commande (SE) est conçue de telle sorte que, par une télécommande par l'intermédiaire du ou des terminaux de communication (T1, T2, T3), le son du téléviseur externe (F) peut être reproduit par l'intermédiaire d'un dispositif de reproduction, notamment d'un écouteur, raccordé à un récepteur de radiodiffusion (R1, R2, R3).

5. Dispositif selon l'une des revendications précédentes, dans lequel au moins un module de commande (ST) pour un téléviseur externe (F) et au moins un module de réception de radiodiffusion commandable (R1, R2, R3) sont intégrés dans l'unité de commande (SE).

6. Dispositif selon l'une des revendications précédentes, dans lequel, pour chaque module de réception de radiodiffusion (R1, R2, R3), il existe une unité de raccordement séparée (HR1, HR2, HR3) pour au moins un dispositif de reproduction, notamment un écouteur.

7. Dispositif selon la revendication 6, dans lequel une unité de raccordement séparée (HR1, HR2, HR3) comporte au moins un couplage de raccordement (K) pour un dispositif de reproduction, notamment un écouteur, et un dispositif de réglage (R) pour le volume sonore du dispositif de reproduction.

8. Dispositif selon la revendication 6 ou 7, dans lequel l'unité de raccordement (HR1, HR2, HR3) associée à un récepteur de radiodiffusion (R1, R2, R3) est intégrée dans un terminal de communication (T1, T2, T3) associé.

9. Dispositif selon l'une des revendications précédentes, dans lequel l'unité de commande (SE) et son raccordement (AD, AK) au réseau de distribution de communication central (ZN) sont intégrés dans une boîte de distribution (VD) pouvant être montée de préférence contre un mur.
